# DEMANDE DE BREVET EUROPEEN

(11) **EP 0 831 271 A1**
(43) Date de publication de la demande: **25.03.1998**
(21) Numéro de dépôt: 97460037.1
(22) Date de dépôt: 17.09.1997
(51) Int. Cl.: F17C 13/02, G01F 23/70, G01F 23/72

(54) **Dispositif de contrôle du niveau de remplissage dans des enceintes de stockage de liquide sous pression**

(30) Priorité: 19.09.1996 FR 9611635
(71) Demandeur: Le Gall, Paul, 29340 Riec Sur Belon (FR)
(72) Inventeur: Le Gall, Paul, 29340 Riec Sur Belon (FR)
(74) Mandataire: Schmit, Christian Norbert Marie

(57) **Abrégé**

La présente invention concerne un dispositif indicateur du niveau de remplissage dans une enceinte (1) destinée à contenir un liquide (2) sous pression comprenant une vanne de décharge (3) prolongée par un tube plongeur (4). Il se caractérise en ce qu'il comporte :
un flotteur (9) libre de se déplacer en translation le long dudit tube plongeur (9) et comprenant au moins un aimant permanent (10); et
au moins un enroulement récepteur (6) disposé autour de la partie haute (L) dudit tube plongeur (4) correspondant au niveau plein de l'enceinte ;
afin qu'il soit produit dans ledit enroulement récepteur (6) un signal induit indicateur de niveau plein à la double condition que ledit flotteur (9) se déplace et qu'il se trouve en face dudit enroulement récepteur (6).

Application au contrôle du niveau de remplissage de bouteilles de dioxyde de carbone dans des installations de lutte contre l'incendie.

## Description

La présente invention concerne le contrôle du niveau de remplissage en liquide sous pression dans des enceintes de stockage, s'agissant plus particulièrement de bouteilles de gaz liquide tel que dioxyde de carbone dans des installations de lutte contre l'incendie.

L'invention a été conçue plus spécialement dans le cadre d'installations fixes à bord de navires, destinées à la protection des salles des machines et/ou des cales.

Dans ces installations, le gaz carbonique liquide est stocké dans des bouteilles dont la contenance est généralement de 50 kg, équipées de vannes de décharge en haute pression. Les bouteilles sont regroupées en batterie dont l'importance est fonction du volume de l'espace à protéger.

Actuellement, le contrôle du niveau de remplissage des bouteilles est effectué périodiquement, soit généralement une fois par an pour satisfaire aux règlements en vigueur.

Il existe deux méthodes reconnues d'opérer ce contrôle : l'une avec un appareil à ultra-sons qui permet de repérer le niveau atteint par le liquide dans la bouteille, mais qui a la réputation d'être moins précise que la méthode par pesée, laquelle malheureusement implique obligatoirement le démontage et la remise en place de chaque bouteille.

En fait, la situation en la matière à ce jour souffre de deux inconvénients majeurs que sont la lourdeur d'une opération de contrôle efficace et l'absence d'un contrôle permanent, synonyme en cas de fuite d'une absence partielle ou totale de protection.

L'invention a été réalisée dans le but de pallier simultanément ces deux inconvénients de façon simple et parfaitement fiable.

L'invention consiste globalement en le contrôle électromagnétique de la position et/ou des déplacements verticaux d'un flotteur à l'intérieur d'une enceinte de stockage de liquide sous pression, les informations étant accessibles de façon immédiate et, de préférence, conservées en mémoire de façon permanente.

Plus précisément, l'invention réside dans un dispositif indicateur du niveau de remplissage dans une enceinte destinée à contenir un liquide sous pression et comprenant une vanne de décharge prolongée par un tube plongeur, caractérisé en ce qu'il comprend :
un flotteur libre de se déplacer en translation le long dudit tube plongeur et comprenant au moins un aimant permanent ; et
au moins un enroulement récepteur disposé autour de la partie haute dudit tube plongeur correspondant au niveau plein de l'enceinte ;
afin qu'il soit produit dans ledit enroulement récepteur un signal induit indicateur de niveau plein à la double condition que ledit flotteur se déplace et qu'il se trouve en face dudit enroulement récepteur.

Dans certaines applications, le déplacement du flotteur peut se produire naturellement, par exemple à bord d'un navire où le niveau de la surface du liquide dans l'enceinte est sujet à des variations en fonction de l'état de la mer.

Toutefois, dans une forme de réalisation préférée de l'invention, des moyens sont prévus pour imprimer des mouvements au flotteur lorsqu'il se trouve le long de la partie haute dudit tube plongeur correspondant au niveau plein de l'enceinte. En pratique, ces moyens peuvent consister en une pluralité d'enroulements émetteurs se succédant le long dudit tube plongeur, alternés avec des enroulements récepteurs. Les enroulements émetteurs sont alimentés en courant alternatif pour imprimer des mouvements verticaux oscillants au flotteur par l'intermédiaire d'une première partie aimantée se trouvant en vis-à-vis avec l'un desdits enroulements émetteurs, tandis qu'une seconde partie aimantée se trouvant en vis-à-vis d'un enroulement récepteur y produira un signal induit. Les deux parties aimantées peuvent être des éléments distincts, ou bien un même élément de hauteur suffisante.

Selon une autre caractéristique de l'invention, il peut être prévu des moyens d'indication supplémentaires : par exemple, le tube plongeur comporte un arrangement de contacts supérieur correspondant à un niveau de remplissage maximal et un arrangement de contacts inférieur correspondant à un niveau de vide total, avec lesquels sont destinés à coopérer respectivement un moyen conducteur supérieur et un moyen conducteur inférieur du flotteur.

Ces caractéristiques et avantages de l'invention, ainsi que d'autres, apparaîtront plus clairement dans la description qui va suivre, faite en relation avec les dessins joints, dans lesquels :
- la figure 1 est une vue en coupe d'une bouteille de gaz liquide contenant du dioxyde de carbone munie du dispositif selon l'invention;
- la figure 2 est une vue schématique partielle de ce même dispositif;
- les figures 3 et 4 représentent respectivement une première et une seconde variante;
- la figure 5 illustre le principe d'un dispositif similaire à celui des figures précédentes doté de moyens complémentaires;
- la figure 6A est une vue en coupe de la vanne de décharge d'une bouteille de gaz liquide selon l'invention;
- la figure 6B est une vue en coupe aggrandie d'une partie de la figure 6A; et
- la figure 7 est un schéma d'un système de surveillance du niveau de remplissage d'une batterie de bouteilles de dioxyde de carbone liquide équipées du dispositif selon l'invention.

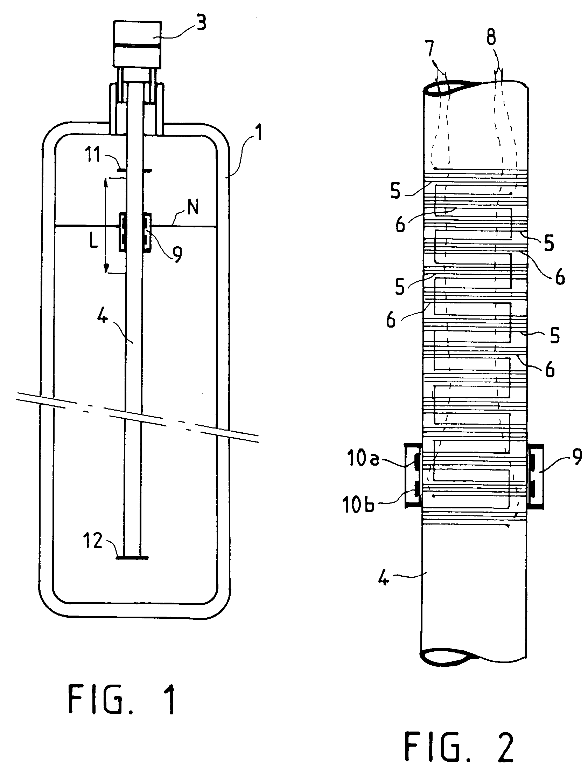

Tel que le montre la figure 1, un dispositif de contrôle de niveau de remplissage selon l'invention est monté sur une bouteille de gaz liquide 1 contenant du dioxyde de carbone 2 jusqu'à un niveau N. La bouteille de gaz liquide 1 est munie d'une vanne 3 prolongée par un tube plongeur 4.

Le dispositif de contrôle comporte une pluralité d'enroulements émetteurs 5, figure 2, disposés autour de la partie haute du tube plongeur 4 et disposés en alternance avec des enroulements récepteurs 6. Ils recouvrent une portion L de la longueur du tube plongeur 4 correspondant au niveau plein de la bouteille. Les enroulements émetteurs 5 sont constitués, par exemple, de spires en fil de cuivre émaillé. Ils sont reliés en série entre eux et sont accessibles par deux fils 7 passant à l'intérieur du tube plongeur 4, puis dans la vanne 3. Il en est de même pour les enroulements récepteurs 6 accessibles par deux fils 8. De préférence, les enroulements seront noyés dans une résine synthétique pour les isoler du dioxyde de carbone 2.

Le dispositif de contrôle comporte également un flotteur 9 en forme d'anneau enfilé sur le tube plongeur 4 et donc apte à se déplacer le long de ce dernier entre deux butées inférieure et supérieure, respectivement 11 et 12, figure 1. Le flotteur 9 est muni de deux aimants toriques 10a et 10b identiques disposés l'un au dessus de l'autre. Avantageusement, le flotteur est réalisé en matière synthétique dans laquelle sont noyés les aimants toriques 10a et 10b.

La hauteur des aimants 10a, 10b et leur écartement sont tels que dans la zone L du tube plongeur 4, l'un est toujours en vis-à-vis avec un enroulement émetteur 5, tandis que l'autre est en vis-à-vis avec un enroulement récepteur 6. De préférence, les aimants toriques et les enroulements sont de même hauteur.

Dans un autre mode de réalisation, on pourra prévoir un unique aimant torique dont la hauteur correspondrait à la somme des hauteurs des aimants 10a, 10b, augmentée de leur écartement.

En fonctionnement, les enroulements émetteurs 5 sont alimentés par un courant alternatif de fréquence prédéterminée. Par ailleurs, le champ magnétique ou direction Nord-Sud des aimants 10a et 10b est parallèle à l'axe des enroulements et du tube plongeur.

Le passage d'un courant alternatif dans les enroulements émetteurs 5 crée un champ magnétique variable parallèle à l'axe des enroulements dont la polarité varie avec le sens du courant.

Ce changement périodique de polarité du champ magnétique produit un mouvement d'oscillation du flotteur 9 par la présence de l'un des aimants 10a ou 10b en vis-à-vis avec un enroulement émetteur 5 suivant que l'aimant 10a ou 10b et l'enroulement 5 se repoussent ou s'attirent.

Les aimants permanents 10a et 10b étant solidaires, l'autre aimant, 10a ou 10b, se trouve en vis-à-vis d'un enroulement récepteur 6 et est animé du même mouvement d'oscillation dont le résultat est la création d'une force électromotrice induite dans cet enroulement récepteur 6. Cette force électromotrice induite est ensuite mesurée en sortie de vanne par un équipement approprié.

Les enroulements étant situés sur longueur L de la partie supérieure du tube plongeur 4, la détection d'une force électromotrice dans les enroulements récepteurs indique un niveau de remplissage satisfaisant de la bouteille.

En variante, on pourra prévoir des enroulements sur une autre partie du tube plongeur 4 pour indiquer un niveau de remplissage intermédiaire de l'enceinte.

Le dispositif selon l'invention peut être facilement adapté aux équipements existants. Il suffit de remplacer la vanne 3 et le tube plongeur 4 par un matériel équivalent équipé du dispositif de l'invention.

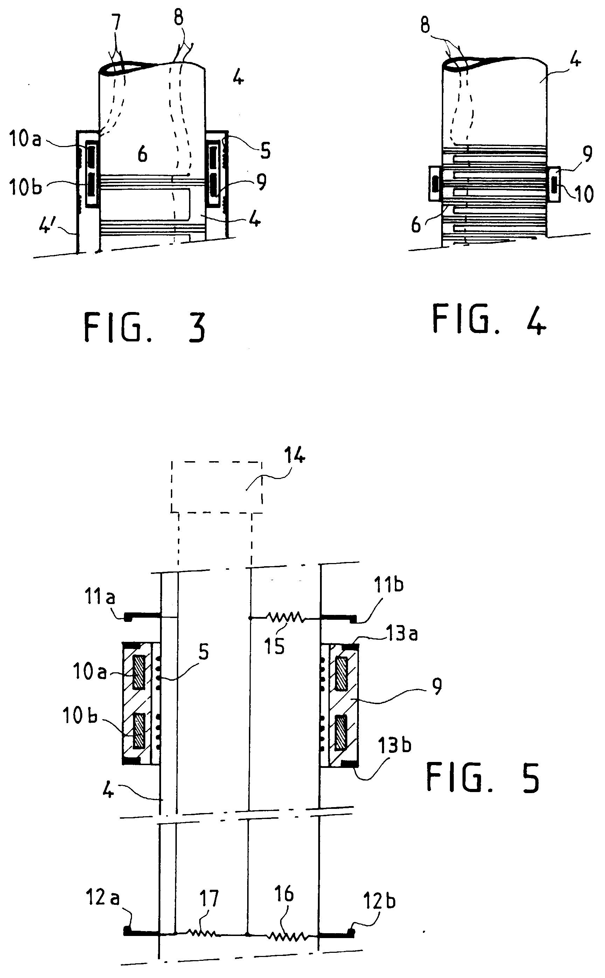

Selon un premier mode de réalisation en variante illustré figure 3, les enroulements émetteurs 5 sont portés par un second tube plongeur 4' de diamètre plus large que le tube 4, afin de permettre le libre passage du flotteur 9 entre ces derniers.

Cette disposition du flotteur 9 à l'intérieur des enroulements 5 a pour avantage que le champ magnétique des enroulements 5 produisant les déplacements du flotteur 9 est plus élevé, et donc plus efficace pour un courant donné.

Selon un second mode de réalisation en variante, le dispositif de contrôle ne comporte pas d'enroulements émetteurs. Ce dispositif est par exemple destiné à être installé à bord de navires où le niveau de la surface du liquide dans la bouteille varie avec les mouvements dus à l'état de la mer.

Ce dispositif utilise le mouvement naturel du flotteur 9 par rapport aux enroulements récepteurs 6. La figure 4 décrit un tel dispositif. Le tube plongeur 4 est entouré uniquement d'enroulements récepteurs 6 et le flotteur 9 comporte un seul aimant 10. De la même manière que pour le dispositif de la figure 2, le déplacement de l'aimant 10 par rapport aux enroulements récepteurs 6 crée une force électromotrice induite dans ces derniers.

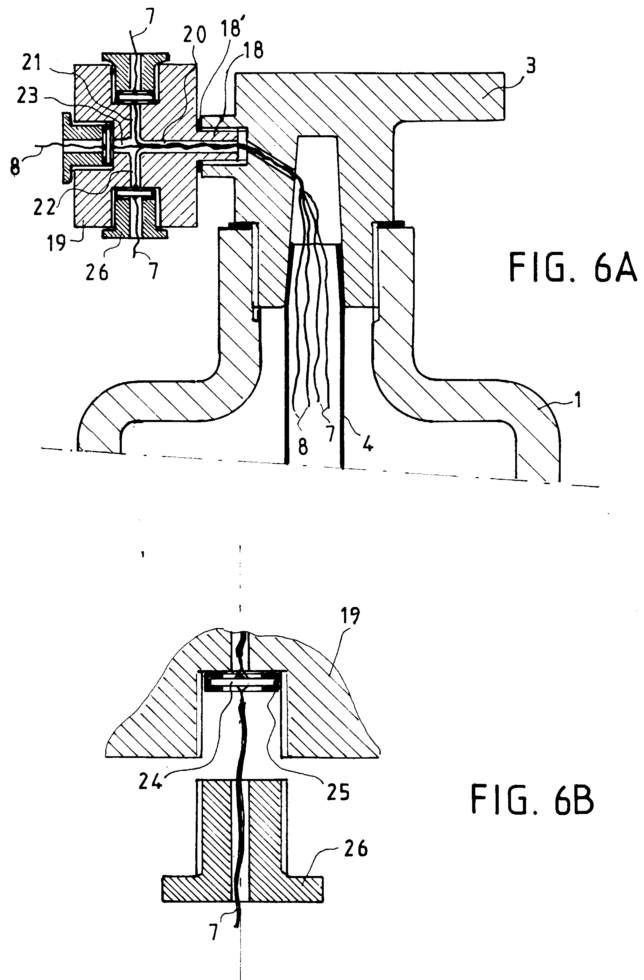

Dans un autre mode de réalisation, le dispositif de contrôle comporte des moyens complémentaires pour détecter si la bouteille est complètement pleine ou vide. Ce mode de réalisation est décrit à la figure 5.

Ces moyens comprennent sur le flotteur 9 deux anneaux électriquement conducteurs 13a et 13b, de préférence en cuivre, disposés respectivement sur sa face supérieure et sa face inférieure.

Les anneaux conducteurs 13a et 13b sont respectivement associés à des contacts supérieurs 11a, 11b et des contacts inférieurs 12a, 12b pour former avec eux des interrupteurs de circuits. De préférence, les contacts supérieurs et inférieurs forment les butées haute et basse pour le flotteur 9 sur le tube plongeur 4. Si la bouteille est complètement pleine, l'anneau 13a établit la fermeture entre les contacts 11a et 11b. De même, si la bouteille est vide, un signal indicateur est produit de par la fermeture des contacts 12a et 12b par l'anneau 13b.

Sur la figure 5, les butées 11 et 12 sont constituées de deux tiges métalliques, respectivement 11a-11b et 12a-12b, fixées de part et d'autre du tube plongeur 4. Les tiges 11a et 12a sont connectées à une borne d'une source de tension continue 14. D'autre part, les tiges 11b et 12b sont connectées à l'autre borne de la source de tension 14 respectivement au travers de résistances 15 et 16 de valeurs différentes. Une résistance 17 est également prévu entre les deux bornes de la source de tension continue 14, au niveau de la butée inférieure 12, pour s'assurer que le circuit n'est pas coupé par endroits. Toutes les connexions et les résistances du circuit sont placées à l'intérieur du tube plongeur 4 et noyées dans une résine synthétique.

La valeur du courant circulant dans le circuit indique l'état de la bouteille. Considérons, dans un exemple, une source 14 délivrant une tension continue de 12 volts et des résistances 15, 16 et 17 ayant respectivement pour valeur 30 ohms, 120 ohms et 120 ohms. L'état plein sera indiqué par un courant de 0.5 A, l'état vide par un courant de 0.2 A et l'état intermédiaire révélant une fuite par un courant de 0.1A. Par ailleurs, si le circuit est ouvert, le courant est nul.

Un autre moyen complémentaire dans un dispositif selon l'invention peut être prévu pour produire un signal indicateur d'une fuite relativement importante et du moment auquel elle se produit. Ces moyens consistent en une thermistance placée dans la bouteille, qui rendra compte de l'abaissement de température brutal produit par le phénomène de détente.

Dans une forme de réalisation préférée représentée schématiquement aux figures 6A et 6B, les quatres fils conducteurs 7 et 8 enveloppés d'une gaine isolante passent dans un passage de la vanne de décharge 3, celui-ci pouvant être la sortie de surpression, laquelle sortie débouche à l'extérieur par un orifice taraudé 18 destiné à recevoir un joint 18' et un bouchon à vis 19.

Le bouchon à vis 19 comprend un passage principal 20 ouvert d'un coté en extrémité de la partie vis, et se subdivisant de l'autre coté en cinq passages secondaires, l'un non apparent pourvu d'une valve de surpression, et les autres (dont trois 21, 22 et 23 sont apparents) destinés à recevoir chacun un fil conducteur 7 ou 8. Chaque passage secondaire se termine par un orifice taraudé dans les faces externes du bouchon 16.

Selon une caractéristique de l'invention, il est prévu une pièce conductrice 24 dont la périphérie est enveloppée par un joint 25, qui vient s'adapter au fond de chaque orifice et qui est serrée au moyen d'une vis de pression 26. Intérieurement, chaque fil conducteur aboutit et est connecté électriquement à la face interne de ladite pièce conductrice 24 qui, par sa face externe est connectée à un conducteur externe pour assurer la continuité électrique entre l'intérieur et l'extérieur de la bouteille. Le joint 25 enveloppant la pièce conductrice 24 assure l'étanchéité du dispositif.

Bien que représentés sur les figures 6A et 6B rentrant à l'intérieur du tube plongeur, les fils conducteurs 7 et 8 peuvent en variante rester extérieurs au tube plongeur, auquel cas ils pénètrent dans le corps de vanne par un conduit de passage ouvert à la base de celle-ci, rejoignant éventuellement le conduit menant à la sortie de surpression.

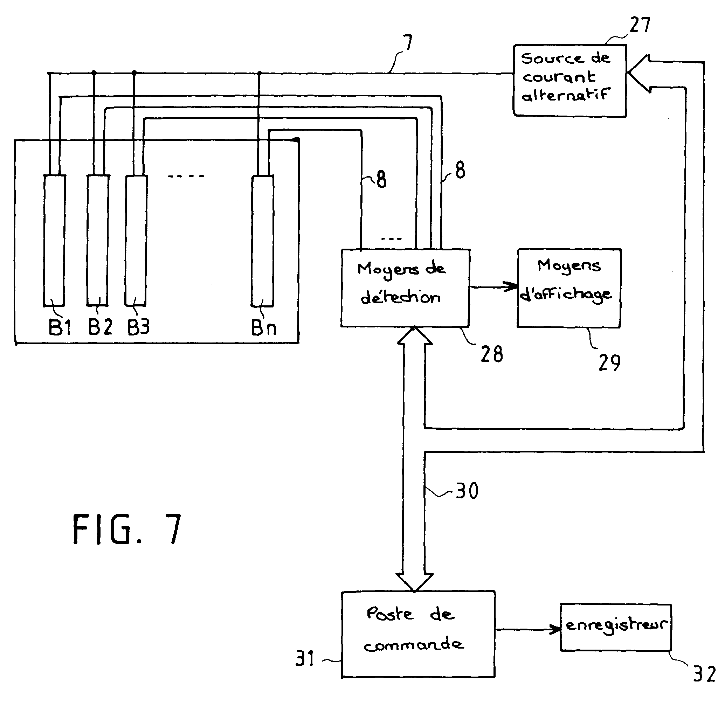

La figure 7 est un schéma d'un système de surveillance du niveau de remplissage d'une batterie de bouteilles B1..Bn de dioxyde de carbone liquide équipées du dispositif selon l'invention.

Les enroulements émetteurs des bouteilles B1..Bn sont alimentés par une source de courant alternatif 27 par l'intermédiaire des fils 7. Les enroulements récepteurs des bouteilles sont par ailleurs connectés par l'intermédiaire des fils 8 à des moyens de détection 28 d'un signal induit dans les enroulements récepteurs. L'ensemble de ces moyens sera de préférence placé à proximité de la batterie de bouteilles.

D'autre part, les moyens de détection 28 sont connectés à des moyens d'affichage 29, par exemple un tableau comportant des indicateurs lumineux représentatifs du niveau de remplissage des bouteilles B1..Bn. On pourra également prévoir des alarmes sonores se déclenchant si une bouteille est insuffisamment remplie au moment du contrôle.

Les moyens de détection 28 et la source de courant alternatif 27 sont commandés via un bus 30 par un poste de commande 31 situé à proximité de la batterie de bouteilles ou à distance, dans la cabine de pilotage par exemple. Pour les installations de lutte contre l'incendie, le poste de commande 31 sera de préférence muni de moyens d'enregistrement 32, de type enregistreur à bande plombé. L'enregistrement du niveau de remplissage des bouteilles sera particulièrement utile pour vérifier le bon fonctionnement des bouteilles en cas de sinistre.

Dans la pratique, un dispositif particulièrement fiable pourra consister en une association regroupant plusieurs ou la totalité des dispositifs décrits. Par exemple, le dispositif décrit à la figure 2 comprenant des enroulements émetteurs et récepteurs peut être prévu pour fonctionner dans un mode récepteur, dans lequel les enroulements émetteurs sont transformés en enroulements récepteurs.

## Revendications

1. Dispositif indicateur du niveau de remplissage dans une enceinte (1) destinée à contenir un liquide (2) sous pression et comprenant une vanne de décharge (3) prolongée par un tube plongeur (4), caractérisé en ce qu'il comprend :
un flotteur (9) libre de se déplacer en translation le long dudit tube plongeur (9) et comprenant au moins un aimant permanent (10); et
au moins un enroulement récepteur (6) disposé autour de la partie haute (L) dudit tube plongeur (4) correspondant au niveau plein de l'enceinte ;
afin qu'il soit produit dans ledit enroulement récepteur (6) un signal induit indicateur de niveau plein à la double condition que ledit flotteur (9) se déplace et qu'il se trouve en face dudit enroulement récepteur (6).

2. Dispositif selon la revendication 1, caractérisé en ce qu'il comporte des moyens pour imprimer des mouvements audit flotteur (9) lorsqu'il se trouve le long de la partie haute (L) dudit tube plongeur (4) correspondant au niveau plein de l'enceinte (1).

3. Dispositif selon la revendication 2, caractérisé en ce que lesdits moyens pour imprimer des mouvements au flotteur comportent au moins un enroulement émetteur (5) disposé sur la partie haute (L) du tube plongeur (4) à proximité dudit enroulement récepteur (6), ledit enroulement émetteur (5) étant destiné à coopérer avec ledit aimant (10) du flotteur (9) lorsqu'ils sont en vis-à-vis, pour imprimer des oscillations audit flotteur (9) par passage d'un courant alternatif dans ledit enroulement émetteur (5).

4. Dispositif selon la revendication 3, caractérisé en ce que ledit aimant permanent (10) est constitué de deux parties aimantées distinctes (10a,10b), dont les hauteurs et l'écartement sont tels que, lorsque le flotteur (9) se trouve dans la partie haute (L) du tube plongeur (4), il a toujours l'une de ses parties aimantées qui se trouve en vis-à-vis avec un enroulement émetteur (5) tandis que l'autre se trouve en vis-à-vis avec un enroulement récepteur (6).

5. Dispositif selon la revendication 3 ou 4, caractérisé en ce que ledit enroulement émetteur (5) est disposé sur la partie haute d'un second tube plongeur (4') disposé concentriquement autour du tube plongeur (4), et suffisamment écarté de ce dernier pour permettre le libre passage du flotteur 9 entre eux.

6. Dispositif selon l'une quelconque des revendications 1 à 5, caractérisé en ce qu'il comporte en outre au moins un enroulement récepteur (5) dans une partie du tube plongeur (4) autre que la partie haute (L) pour indiquer un niveau de remplissage intermédiaire de l'enceinte (1).

7. Dispositif selon l'une quelconque des revendications 1 à 6, caractérisé en ce que le tube plongeur (4) comporte en outre un arrangement de contacts supérieur (11a,11b) correspondant à un niveau de remplissage maximal et un arrangement de contacts inférieur (12a,12b) correspondant à un niveau de vide, avec lesquels sont destinés à coopérer respectivement un moyen conducteur supérieur (13a) et un moyen conducteur inférieur (13b) du flotteur (9), pour produire respectivement un signal de remplissage maximal et un signal de vide.

8. Dispositif selon l'une des revendications 3 à 7, caractérisé en ce que la vanne de décharge (3) comporte un passage débouchant sur l'extérieur par un orifice taraudé (18) destiné à recevoir un bouchon à vis (19), des fils conducteurs (7,8) transportant ledit signal induit et ledit courant alternatif étant passés à travers ledit passage,
et en ce que le bouchon à vis (19) comprend un passage principal (20) ouvert d'un coté en extrémité de la partie vis du bouchon et se subdivisant de l'autre coté en cinq passages secondaires, le premier pourvu d'une valve de surpression et les quatre autres (21,22,23) destinés à recevoir un fil conducteur (7,8).

9. Dispositif selon la revendication 8, caractérisé en ce que chaque passage secondaire (21,22,23) se termine par un orifice taraudé dans les faces externes du bouchon à vis (19), et
en ce que, pour assurer l'étanchéité du dispositif, une pièce conductrice (24) dont la périphérie est enveloppée d'un joint (25) est introduite au fond de l'orifice taraudé de chaque passage secondaire et est serrée au fond de l'orifice au moyen d'une vis de pression (26), le fil conducteur (7,8) débouchant dans ledit orifice taraudé étant connecté électriquement à la face interne de ladite pièce conductrice (24) qui, par sa face externe est connectée à un fil conducteur externe transportant le signal induit ou le courant alternatif à l'extérieur de la bouteille.

10. Dispositif selon l'une des revendications précédentes caractérisé en ce qu'il comporte en outre des moyens pour produire un signal indicateur d'une fuite importante de liquide (2) sous pression, lesquels moyens comprennent une thermistance placée à l'intérieur de l'enceinte (1) pour détecter un abaissement de température brutal résultat d'une détente du gaz (2) contenu dans l'enceinte (1).

11. Dispositif selon l'une des revendications précédentes caractérisé en ce qu'il est monté dans une installation de lutte contre l'incendie comprenant des bouteilles de dioxyde de carbone liquide.
